# EUROPÄISCHE PATENTANMELDUNG

(11) **EP 4 792 635 A1**
(43) Veröffentlichungstag der Anmeldung: **19.08.2026**
(21) Anmeldenummer: 25157676.5
(22) Anmeldetag: 13.02.2025
(51) Int. Cl.: A01C 7/08, A01C 7/12

(54) **ANORDNUNG ZUM DOSIERTEN AUSBRINGEN EINES GRANULAREN MATERIALS FÜR EINE LANDWIRTSCHAFTLICHE MASCHINE, VERFAHREN ZUM DOSIERTEN AUSBRINGEN EINES GRANULAREN MATERIALS SOWIE LANDWIRTSCHAFTLICHE SÄMASCHINE**

(71) Anmelder: Kverneland Group Soest GmbH, 59494 Soest (DE)
(72) Erfinder: NEUMANN, Björn, 59494 Soest (DE); SCHUMACHER, Ferdinand, 59494 Soest (DE); KOTTENSTEDDE, Gregor, 59494 Soest (DE); SCHANZENBACH, Volker, 59494 Soest (DE)
(74) Vertreter: Bittner, Thomas L.

(57) **Zusammenfassung**

Es wird eine Anordnung und ein Verfahren zum dosierten Ausbringen eines granularen Materials für eine landwirtschaftliche Maschine offenbart. Die Vorrichtung weist Folgendes auf: einen Vorratsbehälter (1) zum Aufnehmen eines granularen Materials; eine Förderleitung (4); eine Fördereinrichtung (2) zum Bereitstellen eines Fluidstroms zum Transportieren des granularen Materials aus dem Vorratsbehälter (1) über die Förderleitung (4); und eine Trenneinrichtung (5), die zum Empfangen des Fluidstrom mit dem granularen Material mit der Förderleitung verbunden und eingerichtet ist, den Fluidstrom und das granulare Material zu trennen. Die Trenneinrichtung (5) weist in einem Gehäuse eine Eingangskammer auf und ist eingerichtet, den Fluidstrom mit dem granularen Material zu empfangen. Die Eingangskammer weist einen ersten Strömungsabschnitt, in welchem der Fluidstrom mit dem granularen Material mit einer ersten Strömungsgeschwindigkeit strömt, und einen zweiten Strömungsabschnitt auf, in welchem der Fluidstrom mit dem granularen Material mit einer gegenüber der ersten kleineren zweiten Strömungsgeschwindigkeit strömt, derart, dass das granulare Material im zweiten Strömungsabschnitt und / oder benachbart hierzu aus dem Fluidstrom trennbar ist. Die Trenneinrichtung (5) weist in dem Gehäuse eine Ausgangskammer auf, die mit der Eingangskammer in Fluidverbindung steht und eingerichtet ist, den von dem granularen Material getrennten Fluidstrom abzuleiten. Weiterhin sind bei der Vorrichtung eine Dosiereinrichtung zum Empfangen und Dosieren des von dem Fluidstrom getrennten granularen Materials und eine Ausbringleitung (18) vorgesehen, die eingerichtet ist, das dosierte granulare Material zu empfangen und über eine Ausgangsöffnung (19) auszubringen.

## Beschreibung

Die Erfindung betrifft eine Anordnung zum dosierten Ausbringen eines granularen Materials für eine landwirtschaftliche Maschine, ein Verfahren zum dosierten Ausbringen eines granularen Materials sowie eine landwirtschaftliche Sämaschine.

### Hintergrund

Mit Hilfe landwirtschaftlicher Maschinen werden unterschiedliche granulare Materialien im Feld ausgebracht. Hierzu gehört Saatgut, welches mittels landwirtschaftlicher Sämaschinen ausgebracht wird. Mit Hilfe einer Dosiereinrichtung der landwirtschaftlichen Sämaschine wird das granulare Saatgut dosiert, so dass einzelne Saatkörner (Einzelkornsaat) oder Gruppen von Saatkörnern (Mehrkornsaat) ausgebracht werden. Als weiteres granulares Material wird Dünger mit Hilfe landwirtschaftlicher Maschinen ausgebracht, zum Beispiel mit Hilfe eines Düngerstreuers. Auch kann vorgesehen sein, dosierte Körnermengen des Düngermaterials mit einer landwirtschaftlichen Sämaschine auszubringen, bei der das Ausbringen des Düngermaterials mit dem Ausbringen des Saatguts kombiniert wird.

Aufgrund von inhärenten Materialeigenschaften neigen die Körner des Düngermaterials zur Verklumpung, was eine dosierte Abgabe der Körner des granularen Düngermaterials erschwert.

### Zusammenfassung

Aufgabe der Erfindung ist es, eine Anordnung zum dosierten Ausbringen eines granularen Materials für eine landwirtschaftliche Maschine, ein Verfahren zum dosierten Ausbringen eins granularen Materials sowie eine landwirtschaftliche Sämaschine anzugeben, mit denen dosierte Mengen des granularen Materials effizient und zuverlässig für das Ausbringen bereitgestellt werden können.

Zur Lösung ist eine Anordnung zum dosierten Ausbringen eines granularen Materials für eine landwirtschaftliche Maschine nach dem unabhängigen Anspruch 1 geschaffen. Weiterhin sind eine landwirtschaftliche Sämaschine sowie ein Verfahren zum dosierten Ausbringen eines granularen Materials mittels einer Anordnung einer landwirtschaftlichen Maschine nach den nebengeordneten Ansprüchen 14 und 15 geschaffen. Ausgestaltungen sind Gegenstand von abhängigen Unteransprüchen.

Nach einem Aspekt ist eine Anordnung zum dosierten Ausbringen eines granularen Materials für eine landwirtschaftliche Maschine geschaffen, die Folgendes aufweist: einen Vorratsbehälter, der eingerichtet ist, ein granulares Material wie Saatgut, Dünger oder dergleichen aufzunehmen; eine Förderleitung; eine Fördereinrichtung, die eingerichtet ist, einen Fluidstrom zum Transportieren des granularen Materials aus dem Vorratsbehälter über die Förderleitung bereitzustellen; eine Trenneinrichtung, die zum Empfangen des Fluidstrom mit dem granularen Material mit der Förderleitung verbunden und eingerichtet ist, den Fluidstrom und das granulare Material zu trennen. Die Trenneinrichtung weist in einem Gehäuse eine Eingangskammer auf, die eingerichtet ist, den Fluidstrom mit dem granularen Material zu empfangen. Die Eingangskammer weist einen ersten Strömungsabschnitt, in welchem der Fluidstrom mit dem granularen Material mit einer ersten Strömungsgeschwindigkeit strömt, und einen zweiten Strömungsabschnitt auf, welcher in Bezug auf den ersten Strömungsabschnitt stromabwärts ausgebildet ist und in welchem der Fluidstrom mit dem granularen Material mit einer gegenüber der ersten kleineren zweiten Strömungsgeschwindigkeit strömt, derart, dass das granulare Material im zweiten Strömungsabschnitt und / oder benachbart hierzu aus dem Fluidstrom trennbar ist. Die Trenneinrichtung weist in dem Gehäuse weiterhin eine Ausgangskammer auf, die mit der Eingangskammer in Fluidverbindung steht und eingerichtet ist, den von dem granularen Material getrennten Fluidstrom abzuleiten. Bei der Anordnung sind weiterhin eine Dosiereinrichtung, die eingerichtet ist, das von dem Fluidstrom getrennte granulare Material zu empfangen und zu dosieren, und eine Ausbringleitung vorgesehen, die mit der Dosiereinrichtung verbunden und eingerichtet ist, das dosierte granulare Material zu empfangen und über eine Ausgangsöffnung auszubringen.

Nach einem weiteren Aspekt ist eine landwirtschaftliche Sämaschine, mit der vorangehend erläuterten Anordnung vorgesehen.

Nach einem anderen Aspekt ist ein Verfahren zum dosierten Ausbringen eines granularen Materials mittels einer Anordnung einer landwirtschaftlichen Maschine geschaffen, bei dem Folgendes vorgesehen ist: Bereitstellen eines granularen Materials wie Saatgut, Dünger oder dergleichen in einem Vorratsbehälter; Fördern des granularen Materials aus dem Vorratsbehälter über eine Förderleitung mittels einer Fördereinrichtung, die einen Fluidstrom zum Transportieren des granularen Materials erzeugt und Empfangen des Fluidstroms mit dem granularen Material in einer Trenneinrichtung und Trennen des granularen Materials von dem Fluidstrom. Hierbei ist Folgendes vorgesehen: Empfangen des Fluidstroms mit dem granularen Material in einer Eingangskammer in einem Gehäuse der Trenneinrichtung, Strömen des Fluidstroms mit dem granularen Material entlang eines ersten Strömungsabschnitt der Eingangskammer mit einer ersten Strömungsgeschwindigkeit, Strömen des Fluidstroms mit dem granularen Material entlang eines zweiten Strömungsabschnitt der Eingangskammer, welcher in Bezug auf den ersten Strömungsabschnitt stromabwärts ausgebildet ist und in welchem der Fluidstrom mit dem granularen Material mit einer gegenüber der ersten kleineren zweiten Strömungsgeschwindigkeit strömt, Trennen des granularen Materials aus dem Fluidstrom im zweiten Strömungsabschnitt und Ableiten des von dem granularen Material getrennten Fluidstrom über eine Ausgangskammer im Gehäuse der Trenneinrichtung. Bei dem Verfahren wird das vom Fluidstrom getrennte granulare Material in einer Dosiereinrichtung empfangen und mittels der Dosiereinrichtung dosiert, worauf das dosierte granulare Material dann über eine Ausgangsöffnung einer Ausbringleitung ausgebracht wird.

Mit Hilfe der vorgeschlagenen Technologie kann das auszubringende granulare Material effizient und sicher von dem Vorratsbehälter zur Trenneinrichtung transportiert werden, um dort vom Fluidstrom separiert zu werden, worauf das separierte granulare Material in der Dosiereinrichtung eingebracht und hier dosiert wird, um schließlich dosierte Mengen des granularen Materials über die Ausbringleitung auszubringen, sei es in Form einzelner Körner oder von Körner- oder Partikelgruppen. Die insbesondere hinsichtlich der Strömungsgeschwindigkeit gesteuerte Strömung des Fluidstroms in der Trenneinrichtung gewährleistet eine zuverlässige Trennung von Fluidstrom und granularem Material, insbesondere dadurch, dass die Strömungsgeschwindigkeit des Fluidstroms mit dem granularen Material im zweiten Strömungsabschnitt vermindert wird, so dass das granulare Material wirksam aus dem Fluidstrom trennbar ist. Danach wird der vom granularen Material getrennte Fluidstrom über die Ausgangskammer abgeleitet, während das granulare Material der Dosiereinrichtung zugeführt wird.

In unterschiedlichen Ausführungsformen kann die Dosiereinrichtung eingerichtet sein, Einzelkorn- oder Mehrkorndosiermengen zu erzeugen, um diese dann über die Ausbringleitung auszubringen. Auf diese Weise können je nach Anwendungsaufgabe im Feld einzelne Körner des granularen Materials oder Gruppen von Körnern dosiert und ausgebracht werden.

Die Dosiereinrichtung kann mit einem drehbar gelagerten Dosierrad gebildet sein, insbesondere zum Erzeugen von Mehrkorndosiermengen. Das Dosierrad kann entlang des Radumfangs Vorsprünge oder Zähne aufweisen, derart, dass zwischen den Vorsprüngen Aufnahmebereiche für Körnermengen des granularen Materials gebildet sind, wodurch dieses mit Hilfe des Dosierrads dosiert wird. Hierbei kann das Dosierrad das granulare Material über eine Eingangsöffnung der Dosiereinrichtung empfangen, in den Aufnahmebereichen zwischen den Vorsprüngen entlang des Radumfangs dosiert aufnehmen und in den Aufnahmebereichen zu einer Ausgangsöffnung der Dosiereinrichtung zur Ausbringleitung hin transportieren. Je nach auszubringendem granularen Material können unterschiedliche Dosiereinrichtungen vorgesehen sein.

Die Eingangskammer und die Ausgangskammer der Trenneinrichtung sind in dem Gehäuse der Trenneinrichtung gebildet. Eine Gehäusekammer der Eingangs- und / oder der Ausgangskammer im Gehäuse der Trenneinrichtung kann auf einer Innenseite der Gehäusekammer frei von den jeweiligen Fluidstrom hinsichtlich der Strömungsgeschwindigkeit bremsenden und / oder in diesem Wirbel induzierenden Strukturen ausgeführt sein. In einem Ausführungsbeispiel ist die Innenseite mit einer im Wesentlichen glatten Oberfläche ausgebildet.

Die Trenneinrichtung kann oberhalb der Dosiereinrichtung angeordnet sein. Bei dieser oder anderen Ausführungsformen kann das vom Fluidstrom getrennte granulare Material im Wesentlichen unter der Einwirkung der Gravitationskraft aus der Eingangskammer der Trenneinrichtung zu der Dosiereinrichtung gelangen, insbesondere frei fallend.

Die Förderleitung kann aufsteigend an die Trenneinrichtung herangeführt sein, also insbesondere schräg zur Horizontalrichtung oder in Vertikalrichtung verlaufen. Zumindest an die Eingangskammer der Trenneirichtung der Trenneinrichtung anschließender Abschnitt der Förderleitung kann aufsteigend ausgebildet sein. Hierdurch kann zum Beispiel einer möglichen Verklumpung des granularen Materials entgegengewirkt werden.

Die Förderleitung kann mit einer Wand der Trenneinrichtung, auf welcher die Förderleitung an die Trenneinrichtung anschließt, einen Winkel zwischen etwa 70 Grad und etwa 100 Grad einnehmen, insbesondere etwa 90 Grad.

Granulare Materie im Sinne der vorliegenden Anmeldung besteht aus vielen kleinen, festen Partikeln wie Körnern oder Kugeln. Beispiele für diesen Zustand sind körniges Material wie Saat- oder Düngerkörner und pulverförmiges Material wie Puder.

Die Eingangskammer kann eingerichtet sein, beim Strömen des Fluidstroms entlang des ersten und des zweiten Strömungsabschnitts die Verkleinerung der zweiten Strömungsgeschwindigkeit gegenüber der ersten Strömungsgeschwindigkeit passiv steuernd einzustellen. Zum Beispiel kann eine passive Steuerung mittels Form- und / oder Oberflächengestaltung einer Wandung im Bereich des ersten und / oder des zweiten Strömungsabschnitts ausgeführt sein. Mittels einer solchen Form- und / oder Oberflächengestaltung kann so die Strömungsgeschwindigkeit in den Strömungsabschnitten beeinflusst werden.

Es kann eine Einstelleinrichtung vorgesehen sein, die betreibbar ist, den Strömungsquerschnitt im ersten und / im zweiten Strömungsabschnitt einzustellen oder zu verändern. Zum Beispiel kann die Einstelleinrichtung ein oder mehrere Stellelemente wie Klappen und / oder Leitbleche aufweisen, die an der Trenneinrichtung angeordnet und verlagerbar sind, um den jeweiligen Strömungsquerschnitt oder beide Strömungsquerschnitte einzustellen. Zum Beispiel können die Stellelemente schwenkbar oder verschiebbar gelagert sein. Für ein oder mehrere Stellelemente kann vorgesehen sein, dass eine Schrägstellung in Strömungsrichtung des Fluidstroms einstellbar ist. Mittels der Einstelleinrichtung kann eine Anpassung der Trenneinrichtung an unterschiedliche granulare Materialein ermöglicht sein.

Die Eingangskammer kann im ersten Strömungsabschnitt einen ersten für den Fluidstrom wirksamen Strömungsquerschnitt und im zweiten Strömungsabschnitt einen zweiten für den Fluidstrom wirksamen Strömungsquerschnitt aufweisen, welcher größer als der erste Strömungsquerschnitt ist. Die Vergrößerung des wirksamen Strömungsquerschnitts ermöglicht eine passive Steuerung der Strömungsgeschwindigkeit dahingehend, dass diese sich aufgrund der Vergrößerung des für den Fluidstrom wirksamen Strömungsquerschnitts vermindert.

Die Vergrößerung des Strömungsquerschnitts kann mit einem sich kontinuierlichen vergrößernden Strömungsquerschnitt in der Eingangskammer ausgebildet sein. Bei dieser Ausführungsform vergrößert sich der Strömungsquerschnitt in der Eingangskammer kontinuierlich, wodurch ein fließender oder kontinuierlicher Übergang zwischen dem ersten und dem zweiten Strömungsabschnitt ausbildbar ist. Die kontinuierliche Vergrößerung des Strömungsquerschnitts kann zum Beispiel mittels einer Trichterform eines Gehäuseabschnitts ausgebildet sein, derart, dass sich der Strömungsquerschnitt in der Eingangskammer kontinuierlich vergrößert, zum Beispiel ausgehend von einem Abschnitt der Eingangskammer mit einer Eingangsöffnung, über welche der Fluidstrom mit dem granularen Material in der Eingangskammer einströmt. Eine solche Trichterform bezüglich einer Querschnittsfläche und / oder einer hierzu querstehenden Querschnittsfläche der Eingangskammer ausgebildet sein.

Der kontinuierlich sich vergrößernde Strömungsquerschnitt kann in einem Ausführungsbeispiel bis zu einer Ausgangsöffnung der Eingangskammer hin erstrecken. Die Ausgangsöffnung der Eingangskammer kann gleichzeitig einen Ausgang der Trenneinrichtung zur Dosiereinrichtung hin bildend ausgeführt sein.

Bei den unterschiedlichen Ausführungsformen kann die Eingangskammer quer zur Strömungsrichtung des Fluidstroms mit dem granularen Material eine runde oder eine eckige Querschnittsfläche aufweisen, zum Beispiel eine viereckige Querschnittsfläche. In ähnlicher Weise kann für die Ausgangskammer quer zur Strömung des Fluidstroms eine runde oder eckige Querschnittsfläche vorgesehen sein.

Der erste Strömungsabschnitt kann an einen Kammereingang der Eingangskammer direkt anschließen. Bei dieser Ausführungsform strömt der Fluidstrom mit dem granularen Material nach dem Eintritt in die Eingangskammer über den Kammereingang direkt in den ersten Strömungsabschnitt. Beim Eintritt des Fluidstroms mit granularem Material über den Kammereingang in die Eingangskammer kann eine Umlenkung des Fluidstroms vorgesehen sein, zum Beispiel eine Umlenkung in eine Strömungsrichtung quer zur Strömungsrichtung in der Förderleitung vor dem Überströmen in die Eingangskammer. Die Umlenkung kann zum Beispiel um einen Winkel zwischen 10 Grad und 180 Grad erfolgen. Beispielweise kann ein Umlenkungswinkel zwischen 70 Grad und 100 Grad vorgesehen sein, insbesondere eine 90 Grad-Umlenkung.

Der zweite Strömungsabschnitt kann an den ersten Strömungsabschnitt direkt anschließen. Bei dieser Ausführungsform geht der erste Strömungsabschnitt direkt in den zweiten Strömungsabschnitt über. Zum Beispiel können der erste und der zweite Strömungsabschnitt hierbei entlang einer Trichterform der Eingangskammer ausgebildet sein.

Das granulare Material kann in dem zweiten Strömungsabschnitt passiv gesteuert aus dem Fluidstrom trennbar sein, derart, dass das granulare Material aus dem Fluidstrom ausfällt, zum Beispiel zu einer Eingangsöffnung der Dosiereinrichtung hin. Die Verminderung der Strömungsgeschwindigkeit im zweiten Strömungsabschnitt bewirkt bei dieser Ausführungsform, dass das granulare Material im Wesentlichen aufgrund der Gravitationskraft aus dem verlangsamten Fluidstrom ausfällt. Das Fallen aufgrund der Gravitationskraft kann derart erfolgen, dass das ausgefallene granulare Material in Richtung einer Ausgangsöffnung der Trenneinrichtung fällt, um von dort zu der Eingangsöffnung der Dosiereinrichtung zu gelangen, zum Beispiel auch im Wesentlichen aufgrund der Wirkung der Gravitationskraft. In einer Ausführungsform kann vorgesehen sein, dass so das Trennen des granularen Materials von dem Fluidstrom, dessen Transport zur Dosiereinrichtung hin und das Einbringen des getrennten granularen Materials in der Dosiereinrichtung im Wesentlichen allein aufgrund der Gravitationskraft erfolgen.

Das Ausfallen des granularen Materials aus dem Fluidstrom kann insbesondere dadurch bedingt sein, dass die Strömungsgeschwindigkeit des Fluidstroms im zweiten Strömungsabschnitt die Schwebegeschwindigkeit des granularen Materials unterschreitet, wodurch die Trennung passiv realisierbar ist.

Der Fluidstrom kann mit dem granularen Material in der Eingangskammer entlang einer ersten Strömungsrichtung strömen, und der von dem granularen Material getrennte Fluidstrom kann in der Ausgangskammer entlang einer zweiten Strömungsrichtung strömen, die von der ersten Strömungsrichtung verschieden ist. Es kann vorgesehen sein, dass die Umlenkung des Fluidstroms von der ersten zu der zweiten Strömungsrichtung in einem Endbereich des zweiten Strömungsabschnitts, in welchem die Strömungsgeschwindigkeit des Fluidstroms verkleinert wird, und / oder benachbart hierzu erfolgt. Die erste und die zweite Strömungsrichtung können einen Winkel zwischen etwa 90 Grad und etwa 180 Grad einnehmen, insbesondere im Wesentlichen entgegengesetzt ausgerichtet sein. In einer Ausführungsform strömt der Fluidstrom mit dem granularen Material in der Eingangskammer zum Boden hin, beispielweise im Wesentlichen in vertikaler Richtung, wohingegen der von dem granularen Material getrennte Fluidstrom in der Ausgangskammer nach oben vom Boden weg strömt, zum Beispiel im Wesentlichen in vertikaler Richtung.

Ein Kammerdurchgang zwischen der Eingangskammer und der Ausgangskammer kann derart eingerichtet sein, dass der von dem granularen Material getrennte Fluidstrom über den Kammerdurchgang zur Ausgangskammer hin entlang einer Strömungsrichtung strömen kann, die zur ersten und / oder zweiten Strömungsrichtung quer verläuft. Auf diese Weise kann die Umlenkung des Fluidstroms zwischen der ersten und der zweiten Strömungsrichtung im Wesentlichen im Bereich des Kammerdurchgangs ausführbar sein.

Die Eingangskammer und die Ausgangskammer können im Gehäuse der Trenneinrichtung benachbart zueinander angeordnet sein. Im eine Ausführungsbeispiel sind die Eingangskammer und die Ausgangskammer in ihrer benachbarten Lage durch eine gemeinsame Trennwand voneinander getrennt. Der Kammerdurchgang zwischen der Eingangskammer und der Ausgangskammer kann als Öffnung in der gemeinsamen Trennwand ausgebildet sein.

Bei unterschiedlichen Ausgestaltungen können ein Strömungsweg, den der Fluidstrom mit dem granularen Material in der Eingangskammer zurücklegt, und ein Strömungsweg, den der vom granularen Material getrennte Fluidstrom in der Ausgangskammer zurücklegt, eine im Wesentlichen gleiche Länge aufweisen. Bei diesen oder anderen Ausführungsformen können die Strömungswege in der Eingangs- und der Ausgangskammer entlang der gemeinsamen Trennwand verlaufen, zumindest abschnittsweise.

Der Vorratsbehälter kann eingerichtet sein, ein granulares Düngermaterial aufzunehmen, welches mit dem Fluidstrom über die Förderleitung zur Trenneinrichtung transportierbar und mittels der Dosiereinrichtung dosierbar ist. Insbesondere granulares Düngermaterial kann dazu führen, dass der Fluidstrom mit dem granularen Material mit Staub (Düngerstaub) beladen ist. Bei dieser Ausgestaltung ist die Trenneinrichtung mit Hilfe des Ableitens des Fluidstroms über die Ausgangskammer eingerichtet, Düngerstaub mit Hilfe des Fluidstroms abzuleiten.

Ein Durchgang zwischen der Eingangskammer der Trenneinrichtung und der Dosiereinrichtung kann betreibbar oder eingerichtet sein, das Zuführen des granularen Materials mittels des Fluidstroms in die Eingangskammer in Abhängigkeit eines Füllstands des granularen Materials im Bereich des Durchgangs passiv zu steuern. Auf diese Weise ist eine selbststeuernde oder -regulierende Einstellung des Fluidstroms zum Zuführen des granularen Materials in die Trenneinrichtung ermöglicht ("*on demand"*)*.* Nimmt der Füllstand im Bereich des Durchgangs zwischen Eingangskammer der Trenneinrichtung und Dosiereinrichtung zu, derart, dass der Durchgang teilweise oder ganz verschlossen wird, weil die Dosiereinrichtung das zugeführte granulare Material nur teilweise dosiert und abführt, bremst dieses den Fluidstrom über die Förderleitung in die Eingangskammer, wodurch das Nachführen von weiterem granularen Material aus dem Vorratsbehälter zu der Eingangskammer hin vermindert oder ganz abgestellt wird. Letzteres ist insbesondere dann der Fall, wenn der Durchgang zur Dosiereinrichtung hin vollständig mit bereits gefördertem granularen Material befüllt oder versetzt ist. Auch kann ein solches Aufstauen des granularen Materials dazu führen, dass der Kammerdurchgang zwischen Eingangskammer und Ausgangskammer teilweise oder vollständig durch das aufgestaute granulare Material verschlossen wird, was den Fluidstrom zusätzlich abbremsen oder ganz zum Stillstand bringen kann.

Hierbei kann vorgesehen sein, beim Aufstauen des Materials auch die Fluidverbindung zwischen der Eingangskammer und der Ausgangskammer teilweise oder ganz verschlossen wird, insbesondere ein Kammerdurchgang von der Eingangskammer zur Ausgangskammer hin, wodurch das Abströmen des von dem granularen Material getrennten Fluidstroms über die Ausgangskammer eingeschränkt oder ganz unterbunden wird.

Wenn die Dosiereinrichtung im weiteren Verlauf dafür sorgt, dass granulares Material aus dem Bereich des Durchgangs zum Dosieren übernommen und dosiert abgeführt wird, fällt der Füllstand, bis schließlich das Nachführen von granularem Material mittels des Fluidstroms wieder zunimmt oder erneut einsetzt. Auf diese Weise ist ein passiv selbststeuerndes System bereitgestellt. Beim Fallen des Füllstands des versetzenden Materials kann auch die Fluidverbindung zwischen der Eingangskammer und der Ausgangskammer wieder freigegeben oder vergrößert werden, worauf das Abströmen des vom granularen Material getrennten Fluidstroms über die Ausgangskammer wieder oder in größerem Umfang ermöglicht ist.

Auf diese Weise ist es ermöglicht, den mit dem granularen Material beladenen Fluidstrom der Trenneinrichtung diskontinuierlich zuzuführen.

Ein Kammerausgang der Ausgangskammer kann eingerichtet sein, den Fluidstrom nach au-βen in eine Umgebung der Trenneinrichtung abzugeben. Auf diese Weise kann zum Beispiel ein Staub belasteter Fluidstrom nach außen in die Umgebung abgleitet werden. Bei einer Ausführungsform kann vorgesehen sein, dass dem Kammerausgang der Ausgangskammer in Strömungsrichtung eine Filter- oder Absorbereinrichtung nachgelagert ist, die betreibbar ist, den Fluidstrom (Abluft) zu reinigen oder zu filtern, insbesondere zur Umweltentlastung, um zum Beispiel Staubpartikel wie Beizstaub herauszufiltern. Alternativ oder ergänzend kann die Filter- oder Absorbereinrichtung zumindest teilweise in dem Kammerausgang gebildet sein. Der Kammerausgang der Ausgangskammer kann in einem Bereich oberhalb der Trenneinrichtung und / oder oberhalb der Dosiereinrichtung angeordnet sein.

Bei einem Ausführungsbeispiel kann eine Fluidleitung anschließen, über welche der Fluidstrom abströmt. Ein Ausgang der Fluidleitung kann angeordnet sein, den Fluidstrom bodennah auszulassen. Hierdurch kann in einer Ausgestaltung zum Beispiel erreicht werden, dass mögliche Partikel in der Abluft wie beispielweise Staubpartikel in größerer Umgebung verteilt werden.

In einer alternativen Ausgestaltung kann vorgesehen sein, dass mittels der Fluidleitung an dem Kammerausgang der Ausgangskammer der Fluidstrom in die Ausbringleitung eingespeist wird, zumindest teilweise, über welche das dosierte granulare Material ausgebracht wird. Auch bei dieser Ausführungsform wird der Fluidstrom schließlich nach außen in die Umgebung abgegeben, aber nachdem der Fluidstrom in die Ausbringleitung eingespeist und entlang eines Abschnitts der Ausbringleitung zur Ausgangsöffnung der Ausbringleitung geströmt ist.

Bei Ausführungsbeispielen kann ein Verstelleinrichtung vorgesehen sein, die eingerichtet ist, das Abströmen des Fluidstroms nach dem Kammerausgang der Ausgangskammer in die Umgebung und / oder in die Fluidleitung einzustellen, so dass die Abluft entweder nur in die Umgebung / die Fluidleitung oder teilweise in die Umgebung und teilweise in die Fluidleitung abströmt. Die Verstelleinrichtung kann zum Beispiel an der Trenneinrichtung angeordnet sein.

Die Vertselleinrichtung kann alternativ oder ergänzend eingerichtet sein, den Fluidstrom in der Fluidleitung aufzuteilen oder zu leiten, derart, dass die Abluft entweder nur aus der Fluidleitung in die Umgebung / in die Ausbringleitung oder teilweise in die Umgebung und teilweise in die Ausbringleitung abströmt.

Bei der landwirtschaftlichen Sämaschine kann vorgesehen sein, dass das granulare Material über die Förderleitung zu einer Trenneinrichtung und einer Dosiereinrichtung transportiert wird, die auf einer Säreihe der landwirtschaftlichen Sämaschine angeordnet sind. Auf diese Weise kann die landwirtschaftliche Sämaschine eingerichtet sein, aus einem zentralen Vorratsbehälter das granulare Material auf alle Säreihen oder einen Teil hiervon zu verteilen, um es dort jeweils vom Fluidstrom zu trennen und zum Ausbringen zu dosieren. Empfängt nur ein Teil der Säreihen den Fluidstrom mit dem granularen Material, kann so einen Teilbreitenbetrieb ausgeführt werden.

Ist die Anordnung mit der Trenneinrichtung und der Dosiereinrichtung zum Beispiel eingerichtet, ein granulares Saatgutmaterial auszubringen, kann jede Säreihe der landwirtschaftlichen Sämaschine über eine solche Trenneinrichtung und die zugeordnete Dosiereinrichtung verfügen.

Bei einem Ausführungsbeispiel kann vorgesehen sein, dass einer einzelnen Trenneinrichtung mehrere Dosiereinrichtungen zugeordnet sind, derart, dass das mittels der einzelnen Trenneinrichtung vom Fluidstrom getrennte granulare Material aufgeteilt und den mehreren Dosiereinrichtungen jeweils teilweise zugeführt wird. So kann zum Beispiel die einzelne Trenneinrichtung ein jeweilige Dosiereinrichtung von mehreren Säreihen mit granularem Material versorgen, welches dann jeweils zum Ausbringen auf der Säreihe dosiert wird.

Ist die Anordnung eingerichtet, ein granulares Düngermaterial auszubringen, kann vorgesehen sein, dass Trenneinrichtung und zugeordnete Dosiereinrichtung eingerichtet sind, Düngermaterial für zwei nebeneinanderliegende Säreihen auszubringen, zum Beispiel derart, dass die Ausbringleitung mit zwei getrennten Ausgangsöffnungen gebildet ist, über die jeweils ein Teil der dosierten Düngermenge ausgebracht wird. Hierfür kann die Ausbringleitung im Bereich der Ausgangsöffnungen als Y-Rohr oder -Leitung ausgeführt sein.

Sind die Säreihen der landwirtschaftlichen Sämaschinen eingerichtet, sowohl granulares Saatgut wie auch granulares Düngermaterial auszubringen, können getrennte Anordnungen mit Trenneinrichtung und Dosiereinrichtung für Saatgut einerseits und Düngermaterial andererseits vorgesehen sein.

Die Anordnungen mit Trenneinrichtung und Dosiereinrichtung sowie Ausbringleitung für granulares Saatgut einerseits und granulares Düngermaterial andererseits können in Bezug auf die verschiedenen beschriebenen Ausführungsformen gleich oder verschieden ausgeführt sein.

Die Ausgangsöffnung der Ausbringleitung, welche das dosierte granulare Material von der Dosiereinrichtung empfängt, kann bei der landwirtschaftlichen Sämaschine benachbart zu einer Schareinrichtung, die zum Beispiel eine oder zwei Schare aufweist, der Säreihe angeordnet sein, derart, dass das ausgebrachte granulare Material in eine mittels der Schareinrichtung hergestellte Furche im Boden oder benachbart hierzu abgelegt wird.

Bei dieser oder anderen Ausführungsbeispielen kann die Ausbringleitung als ein Ausbringstutzen ausgeführt sein, welcher im Bereich der Ausgangsöffnung der Dosiereinrichtung an dieser angeformt sein kann, sei es in einstückiger oder mehrstückiger Ausführung. Im Vergleich zu einer Ausführung der Ausbringleitung mit einer Schlauchleitung kann beim Ausbringstutzen eine wesentlich kürzere Länge vorgesehen sein, was die Zeit zum Ausbringen des granularen Materials nach dem Dosieren minimiert.

In Verbindung mit der Ausgangskammer der Trenneinrichtung kann vorgesehen sein, dass diese einen ersten Strömungsabschnitt, in welchem der von dem granularen Material getrennte Fluidstrom mit einer ersten Strömungsgeschwindigkeit strömt, und einen zweiten Strömungsabschnitt aufweist, welcher in der Ausgangskammer in Bezug auf den ersten Strömungsabschnitt stromabwärts ausgebildet ist und in welchem der Fluidstrom mit einer gegenüber der ersten größeren zweiten Strömungsgeschwindigkeit strömt. Auf diese Weise ist es ermöglicht, den Fluidstrom zum Kammerausgang der Ausgangskammer hin zu beschleunigen. Hierfür kann vorgesehen sein, dass in dem zweiten Strömungsabschnitt ein für den Fluidstrom wirksamer Strömungsquerschnitt gegenüber dem Strömungsquerschnitt im ersten Strömungsabschnitt der Ausgangskammer verkleinert ist. Bezüglich der Ausgestaltung zur passiven Steuerung der Strömungsgeschwindigkeit in dem ersten und dem zweiten Strömungsabschnitt der Ausgangskammer gelten die hierzu in Verbindung mit der Eingangskammer gemachten Erläuterungen entsprechend. So kann zum Beispiel für den Fluidstrom in der Ausgangskammer wirksamen Strömungsquerschnitt eine kontinuierliche Abnahme oder Verkleinerung vorgesehen sein, zum Beispiel mittels einer Trichterform der Ausgangskammer.

Über die Förderleitung können ein oder mehrere Trenneinrichtungen auf einer oder mehreren Säreihen mit dem Fluidstromversorgt werden. In einem Beispiel kann für die Zuleitung des Fluidstroms mit dem granularen Material zu zwei Säreihen eine gemeinsame Förderleitung vorgesehen sein. In einer Verteileinrichtung kann der Fluidstrom aufgeteilt werden, um die geteilten Teilfluidströme mit dem granularen Material den beiden Trenneinrichtungen der Säreihen zuzuleiten. Die Verteileinrichtung kann seitlich eines mittleren Verteilerabschnitts, in welchem die gemeinsame Förderleitung anschließt, sich zur jeweiligen Trenneinrichtung hin erweiternde Verteilabschnitte aufweisen, in denen sich der Strömungsquerschnitt für den jeweiligen Teilfluidstrom erweitert. Auf diese Weise kann zum Beispiel ein unbeabsichtigter Stau des granularen Materials beim Einströmen in die jeweilige Trenneinrichtung vermieden werden.

Die Dosiereinrichtung kann als ein Volumendosierer ausgeführt sein. Hierbei ist die Dosiereinrichtung, im Unterschied zum Einzeldosierer oder Einzelkorndosierer, eingerichtet, Dosiermengen des granularen Materials mit mehreren Partikeln bereitzustellen.

In verschiedenen Ausführungsformen kann vorgesehen sein, dass die Anordnung mit Trenneinrichtung und Dosiereinrichtung auf der Säreihe unmittelbar benachbart zu einem Eingang der Ausbringleitung angeordnet ist, über welche das mittels der Dosiereinrichtung dosierte Material ausgebracht wird, zum Beispiel oberhalb des Eingangs der Ausbringleitung. Auf diese Weise ist ein Leitungsweg, welchen das dosierte Material von der Dosiereinrichtung zum Eingang der Ausbringleitung zurücklegt minimiert.

Bei einer solche oder anderen Ausgestaltungen kann vorgesehen sein, dass die Anordnung mit Trenneinrichtung und Dosiereinrichtung benachbart zur Schareinrichtung der Sähreihe angeordnet ist, was die Ausbringzeit für das dosierte Material (weiter) verkürzen kann.

Zum Beispiel kann eine Anordnung zum dosierten Ausbringen eines granularen Materials für eine landwirtschaftliche Maschine vorgesehen sein, die folgendes aufweist: einen Vorratsbehälter, der eingerichtet ist, ein granulares Material wie Saatgut, Dünger oder dergleichen aufzunehmen; eine Förderleitung; eine Fördereinrichtung, die eingerichtet ist, einen Fluidstrom zum Transportieren des granularen Materials aus dem Vorratsbehälter über die Förderleitung bereitzustellen; eine Trenneinrichtung, die zum Empfangen des Fluidstrom mit dem granularen Material mit der Förderleitung verbunden und eingerichtet ist, den Fluidstrom und das granulare Material zu trennen; eine Dosiereinrichtung, die eingerichtet ist, das von dem Fluidstrom getrennte granulare Material zu empfangen und zu dosieren; und eine Ausbringleitung, die mit der Dosiereinrichtung verbunden und eingerichtet ist, das dosierte granulare Material zu empfangen und über eine Ausgangsöffnung auszubringen. Hierbei ist weiterhin vorgesehen, dass die Trenneinrichtung und die Dosiereinrichtung unmittelbar benachbart zu einem Eingang der Ausbringleitung angeordnet sind, insbesondere direkt oberhalb des Eingangs der Ausbringleitung. Die Trenneinrichtung kann hierbei gemäß einer der vorangehend erläuterten Ausgestaltungen oder einer alternativen (an sich bekannten) Ausführung entsprechend ausgebildet sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Anordnung für eine landwirtschaftliche Sämaschine;
- Fig. 2: eine schematische Darstellung einer Trenneinrichtung zum Trennen eines granularen Materials aus einem Fluidstrom im Schnitt;
- Fig. 3: eine schematische Darstellung einer weiteren Anordnung für eine landwirtschaftliche Sämaschine und
- Fig. 4: eine schematische perspektivische Darstellung einer Anordnung mit zwei Trenneinrichtungen und jeweils zugeordneter Dosiereinrichtung für eine landwirtschaftliche Sämaschine.

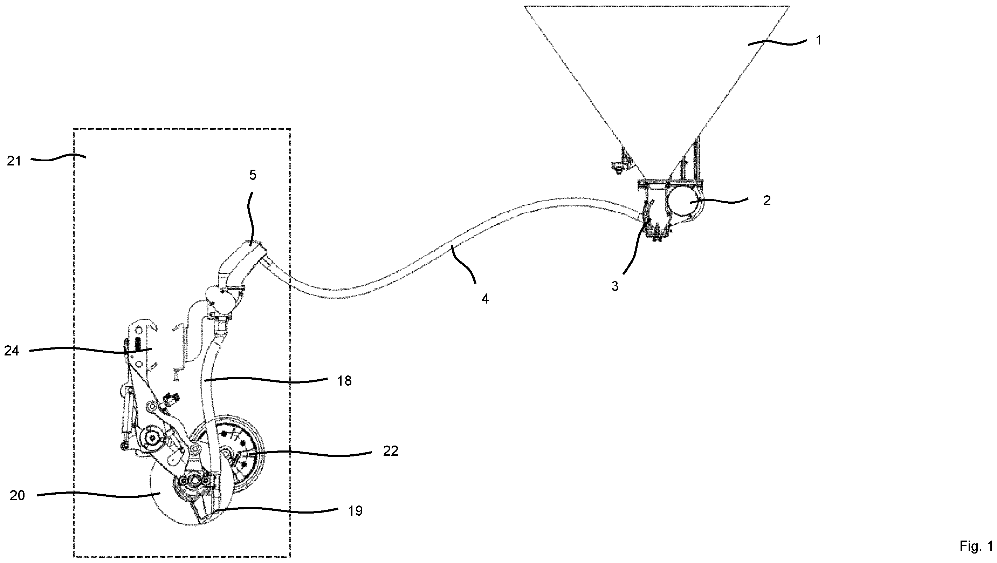

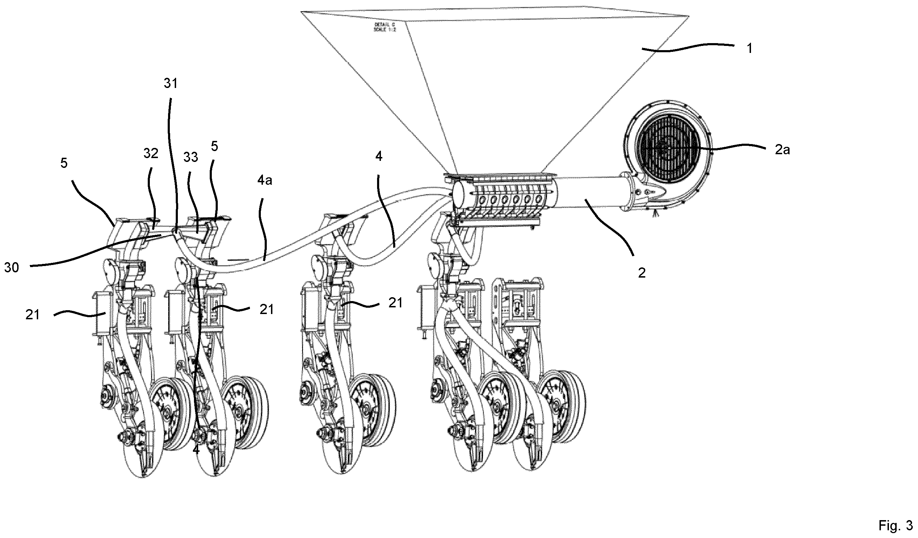

Fig. 1 zeigt eine schematische Darstellung einer Anordnung für eine landwirtschaftliche Sämaschine mit einem Vorratsbehälter 1, welcher eingerichtet ist, ein auszubringendes granulares Material wie granulares Saatgut, granulares Düngermaterial oder dergleichen aufzunehmen. Mit Hilfe einer Fördereinrichtung 2, die zum Beispiel mit einem Gebläse 2a (vgl. beispielhaft Fig. 3 unten) gebildet ist, wird eine Luftstrom zugeführt, um einen Fluidstrom (Luftstrom), welcher mit granularem Material beladen ist, einer Injektionsdüse 3 zuzuführen, um den Fluidstrom mit dem granularen Material in einer Förderleitung 4 einzuspeisen. Fördereinrichtung 2 und Injektionsdüse 3 bilden insoweit eine Sendeeinrichtung oder -einheit zum Einspeisen des Fluidstroms mit dem granularen Material in der Förderleitung 4.

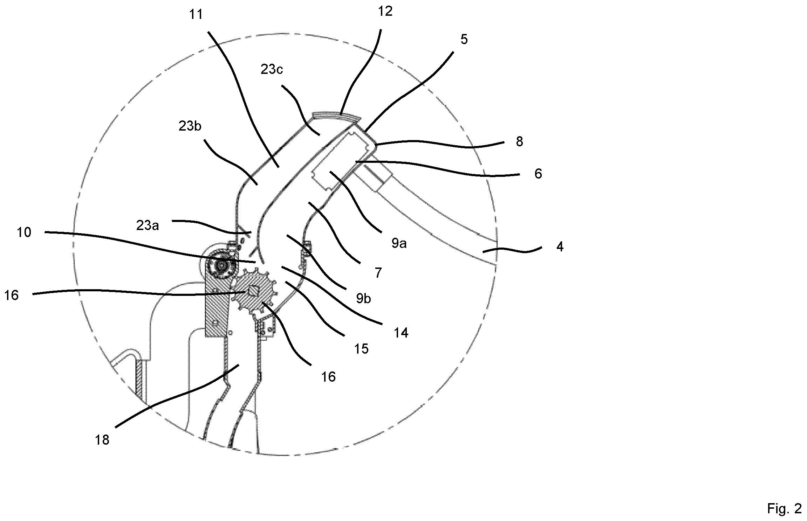

Mittels der Förderleitung 4 wird der Fluidstrom mit dem granularen Material einer Trenneinrichtung 5 zugeführt, die dazu eingerichtet ist, das granulare Material von dem Fluidstrom zu trennen. Die Darstellung in Fig. 2 zeigt die Trenneinrichtung 5 vergrößert im Schnitt.

Über einen Kammereingang 6 einer Eingangskammer 7 in einem Gehäuse 8 der Trenneinrichtung 5 gelangt der Fluidstrom mit dem granularen Material in die Trenneinrichtung 5 und strömt entlang der Eingangskammer 7 nach unten. Hierbei strömt der Fluidstrom mit dem granularen Material in einem ersten Strömungsabschnitt 9a in der Eingangskammer 7 mit einer ersten Strömungsgeschwindigkeit, um dann in einem zweiten Strömungsabschnitt 9b, welcher stromabwärts auf den ersten Strömungsabschnitt 9a folgt, mit geringerer zweiter Strömungsgeschwindigkeit zu strömen. Die Verminderung der Strömungsgeschwindigkeit ist Folge der Vergrößerung des für den Fluidstrom mit dem granularen Material in der Eingangskammer 7 wirksamen Strömungsquerschnitts (zum Beispiel mittels der gezeigten Aufweitung des Gehäuses 8), wodurch eine passive Steuerung der Strömungsgeschwindigkeit für den Fluidstrom erfolgt. Die verminderte zweite Strömungsgeschwindigkeit im zweiten Strömungsabschnitt 9b in der Eingangskammer 7 ermöglicht das Trennen des granularen Materials im zweiten Strömungsabschnitt 9b und / oder einem hierzu benachbarten Bereich in der Eingangskammer 7, insbesondere mittels Ausfallen des granularen Materials aus dem Fluidstrom aufgrund der Gravitationskraft.

Der vom granularen Material getrennte Fluidstrom gelangt sodann über einen Kammerdurchgang 10 in eine Ausgangskammer 11 der Trenneinrichtung 5 im Gehäuse 8. Über einen Kammerausgang 12 der Ausgangskammer 11, welcher mit einem für den Fluidstrom durchlässigen Sieb verschlossen sein kann, um eventuell in dem Fluidstrom verbliebene Partikel des granularen Materials zurückzuhalten, strömt der (Abluft-)Fluidstrom in die Umgebung. Auf diese Weise ist es zum Beispiel ermöglicht, einen mit Staub belasteten Fluidstrom (Systemluft) nach außen abzugeben. Alternativ oder ergänzend kann vorgesehen sein (nicht dargestellt), dass der (Abluft-)Fluidstrom zumindest teilweise über den Kammerausgang 12 in eine Umleitung (Bypass) strömt.

Aufgrund der verminderten Strömungsgeschwindigkeit des Fluidstroms mit dem granularen Material im zweiten Strömungsabschnitt 9b der Eingangskammer 7 kann das granulare Material von dem Fluidstrom getrennt werden, insbesondere dadurch, dass das granulare Material aufgrund der Gravitationskraft durch einen Ausbringöffnung 14 der Trenneinrichtung 5 in eine Eingangs- oder Zuführöffnung 15 einer Dosiereinrichtung 16 gelangt, die unterhalb der Trenneinrichtung 5 angeordnet ist. Die Ausbringöffnung 14 der Trenneinrichtung 5 und die Eingangs- oder Zuführöffnung 15 der Dosiereinrichtung 16 sind im gezeigten Beispiel integriert und im Wesentlichen vollständig überlappend ausgeführt.

Die Dosiereinrichtung 16 weist bei der gezeigten Ausführungsform mit einem Dosierrad 17 auf, welches eingerichtet ist, dass empfangene granulare Material in Dosiermengen zu dosieren, insbesondere Mehrkorndosiermengen, um das dosierte granulare Material dann über eine Ausbringleitung 18 auszubringen, wobei das dosierte granulare Material am Ende der Ausbringleitung 18 durch eine Ausgangsöffnung 19 ausgebracht wird. Das dosierte granulare Material bewegt sich durch die Ausbringleitung 18 im Wesentlichen aufgrund der Gravitationskraft, insbesondere frei von einem den Transport unterstützten Luftstrom. Alternativ kann in der Ausbringleitung ein das Ausbringen des dosierten granularen Materials unterstützender Luftstrom eingebracht werden, zum Beispiel zum zusätzlichen Beschleunigen des granularen Materials in der Ausbringleitung 18.

Beim gezeigten Ausführungsbeispiel ist die Ausgangsöffnung 19 benachbart zu einer Schareinrichtung 20 einer Säreihe 21 angeordnet, die in Fig. 1 mittels einer gestrichelten Linie schematisch angedeutet. Die Schareinrichtung 20 ist eingerichtet, im Boden eine Furche herzustellen. Der Schareinrichtung 20 ist ein Tiefeneinstellrad 22 zugeordnet, um für die Schareinrichtung 20 eine Eindringtiefe im Boden variabel einzustellen. Die funktionalen Elemente der Säreihe 21 sind in Fig. 1 zur Vereinfachung der Darstellung nur teilweise gezeigt. Säreihen für landwirtschaftliche Sämaschinen sind als solche in verschiedenen Ausführungsformen bekannt und regelmäßig eingerichtet, ein Saatgut auszubringen, sei es für eine Einzelkorn- oder eine Mehrkornsaat. Auch kann die Säreihe 21 eingereichte sein, zusätzlich granulares Düngermaterial auszubringen.

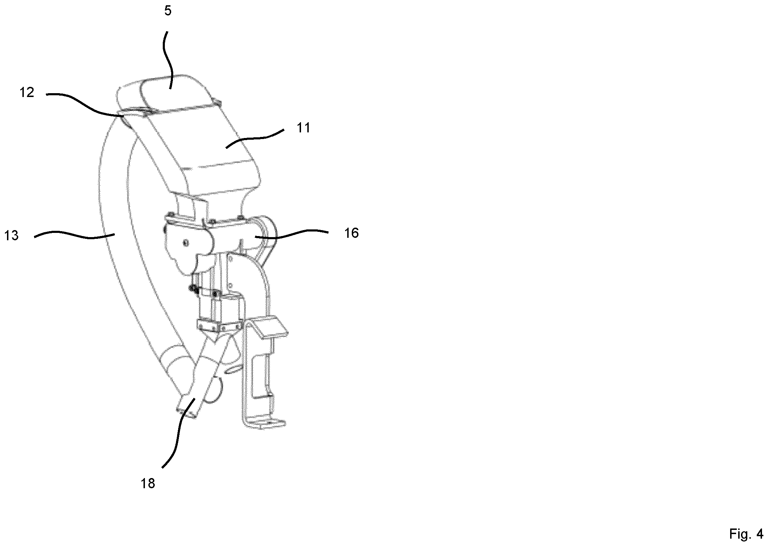

Während bei der Ausführungsform in Fig. 1 und 2 der von der Ausgangskammer 11 über den Kammerausgang 12 abgegebene Fluidstrom in die Umgebung abgegeben wird, kann auch vorgesehen sein (vgl. Fig. 4 unten), den abgegebenen Fluidstrom zumindest teilweise über eine Umleitung (Bypass) 13 in die Ausbringleitung 18 einzuleiten, zum Beispiel zum Unterstützen des Ausbringens des dosierten Materials.

Gemäß Fig. 2 ist die Ausgangskammer 11 beispielhaft mit einem ersten Strömungsabschnitt 23a gebildet, welcher sich an den Kammerdurchgang 10 anschließt, und einem zweiten Strömungsabschnitt 23b gebildet, welcher dann in einen dritten Strömungsabschnitt 23c übergeht, der vor dem Kammerausgang 12 liegt. Hierbei vergrößert sich der für den Fluidstrom in der Ausgangskammer 11 wirksame Strömungsquerschnitt beim Übergang von dem ersten in den zweiten Strömungsabschnitt 23a, 23b, so dass der Fluidstrom in dem zweiten Strömungsabschnitt 23b mit einer geringeren Strömungsgeschwindigkeit strömt, als im ersten Strömungsabschnitt 23a. Sodann verengt sich der wirksame Strömungsquerschnitt im dritten Strömungsabschnitt 23c wieder.

Die Ausbringöffnung 14 der Trenneinrichtung 5 und die Eingangs- oder Zuführöffnung 15 der Dosiereinrichtung 16 ist betreibbar oder eingerichtet, das Zuführen des granularen Materials mittels des Fluidstroms in die Eingangskammer 7 in Abhängigkeit eines Füllstands des granularen Materials im Bereich der Ausbringöffnung 14 / der Eingangs- oder Zuführöffnung 15 passiv zu steuern. Auf diese Weise ist eine selbststeuernde oder -regulierende Einstellung des Fluidstroms zum Zuführen des granularen Materials in die Trenneinrichtung 5 ermöglicht ("on *demand"*)*.* Nimmt der Füllstand im Bereich des Durchgangs im Bereich der Ausbringöffnung 14 / der Eingangs- oder Zuführöffnung 15 zwischen Eingangskammer 7 der Trenneinrichtung 5 und Dosiereinrichtung 16 zu, derart, dass der Durchgang teilweise oder ganz verschlossen wird, weil die Dosiereinrichtung 16 das zugeführte granulare Material nur teilweise dosiert und abführt, bremst dieses den Fluidstrom über die Förderleitung 4 in die Eingangskammer 7, wodurch das Nachführen von weiterem granularen Material aus dem Vorratsbehälter 1 zu der Eingangskammer 7 hin vermindert oder ganz abgestellt wird. Letzteres ist insbesondere dann der Fall, wenn der Durchgang zur Dosiereinrichtung 16 hin vollständig mit bereits gefördertem granularen Material befüllt oder versetzt ist.

Auch kann ein solches Aufstauen des granularen Materials dazu führen, dass der Kammerdurchgang 10 zwischen Eingangskammer 7 und Ausgangskammer 11 teilweise oder vollständig durch das aufgestaute granulare Material verschlossen wird, was den Fluidstrom zusätzlich abbremsen oder ganz zum Stillstand bringen kann. Beim Aufstauen des Materials wird so auch die Fluidverbindung zwischen der Eingangskammer 7 und der Ausgangskammer 11 teilweise oder ganz verschlossen, also insbesondere der Kammerdurchgang 10, wodurch das Abströmen des von dem granularen Material getrennten Fluidstroms über die Ausgangskammer 11 eingeschränkt oder ganz unterbunden wird.

Das Aufstauen des granularen Materials in der Trenneinrichtung 5 bewirkt eine Minderung eines Druckunterschieds zwischen der Eingangskammer 7 der Trenneinrichtung 5 und der als Injektor wirkenden Fördereinrichtung 2, weshalb die weitere Förderung von granularem Material zur Trenneinrichtung 5 hin verlangsamt oder unterbrochen wird.

Wenn die Dosiereinrichtung 16 im weiteren Verlauf dafür sorgt, dass granulares Material aus dem Bereich des Durchgangs im Bereich der Ausbringöffnung 14 / der Eingangs- oder Zuführöffnung 15 zum Dosieren übernommen und dosiert abgeführt wird, fällt der Füllstand und der Druckunterschied zwischen der Eingangskammer7 der Trenneinrichtung 5 und der als Injektor wirkenden Fördereinrichtung 2 nimmt wieder zu, bis schließlich das Nachführen von granularem Material mittels des Fluidstroms wieder zunimmt_oder erneut einsetzt. Auf diese Weise ist ein passiv selbststeuerndes System bereitgestellt. Beim Fallen des Füllstands des versetzenden Materials kann auch die Fluidverbindung zwischen der Eingangskammer 7 und der Ausgangskammer 11 über den Kammerdurchgang 10 wieder freigegeben oder vergrößert werden, worauf das Abströmen des vom granularen Material getrennten Fluidstroms über die Ausgangskammer 11 wieder oder in größerem Umfang ermöglicht ist.

Gemäß Fig. 1 ist eine Halte- oder Montageeinrichtung 24 vorgesehen, um die Säreihe 21 zum Beispiel an einem Tragkalken (nicht dargestellt) zu montieren.

Fig. 3 zeigt eine schematische Darstellung einer weiteren Anordnung für eine landwirtschaftliche Sämaschine. Für gleiche Merkmale werden in Fig. 3 die gleichen Bezugszeichen wie in den Fig. 1 und 2 verwendet. Bei dem gezeigten Beispiel ist für die Zuleitung des Fluidstroms mit dem granularen Material für zwei benachbarte Säreihen 21 eine gemeinsame Förderleitung 4a vorgesehen. In einer Verteileinrichtung 30 wird der Fluidstrom aufgeteilt, um die geteilten Teilfluidströme mit dem granularen Material den beiden Trenneinrichtungen 5 zuzuleiten. Die Verteileinrichtung 30 weist ausgehend von einem mittleren Verteilerabschnitt 31, in welchem die gemeinsame Förderleitung 4a anschließt, sich zur Trenneinrichtung hin erweiternde Verteilabschnitte 32, 33 auf, in denen sich der Strömungsquerschnitt für den jeweiligen Teilfluidstrom erweitert. Auf diese Weise kann zum Beispiel ein unbeabsichtigter Stau des granularen Materials beim Einströmen in die jeweilige Trenneinrichtung vermieden werden.

Fig. 4 zeigt eine schematische perspektivische Darstellung einer Anordnung mit Trenneinrichtung 5 und zugeordneter Dosiereinrichtung 16. Beispielsweise kann vorgesehen sein, die Trenneinrichtung 5 und die zugeordnete Dosiereinrichtung 16 auf getrennten Säreihen anzuordnen (vgl. Fig. 3 oben). Für gleiche Merkmale werden in Fig. 4 die gleichen Bezugszeichen wie in den Fig. 1 bis 3 verwendet. Der von der Ausgangskammer 11 über den Kammerausgang 12 abgegebene Fluidstrom wird bei dem gezeigten Beispiel zumindest teilweise über die Umleitung (Bypass) 13 in die Ausbringleitung 18 eingeleitet, zum Beispiel zum Unterstützen des Ausbringens des dosierten Materials.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung zum dosierten Ausbringen eines granularen Materials für eine landwirtschaftliche Maschine, mit:
- einem Vorratsbehälter (1), der eingerichtet ist, ein granulares Material wie Saatgut, Dünger oder dergleichen aufzunehmen;
- einer Förderleitung (4);
- einer Fördereinrichtung (2), die eingerichtet ist, einen Fluidstrom zum Transportieren des granularen Materials aus dem Vorratsbehälter (1) über die Förderleitung (4) bereitzustellen;
- einer Trenneinrichtung (5), die zum Empfangen des Fluidstrom mit dem granularen Material mit der Förderleitung verbunden und eingerichtet ist, den Fluidstrom und das granulare Material zu trennen, wobei
- die Trenneinrichtung (5) in einem Gehäuse (8) eine Eingangskammer (7) aufweist, die eingerichtet ist, den Fluidstrom mit dem granularen Material zu empfangen,
- die Eingangskammer (7) einen ersten Strömungsabschnitt (9a), in welchem der Fluidstrom mit dem granularen Material mit einer ersten Strömungsgeschwindigkeit strömt, und einen zweiten Strömungsabschnitt (9b) aufweist, welcher in Bezug auf den ersten Strömungsabschnitt (9a) stromabwärts ausgebildet ist und in welchem der Fluidstrom mit dem granularen Material mit einer gegenüber der ersten kleineren zweiten Strömungsgeschwindigkeit strömt, derart, dass das granulare Material im zweiten Strömungsabschnitt (9b) und / oder benachbart hierzu aus dem Fluidstrom trennbar ist, und
- die Trenneinrichtung (5) in dem Gehäuse eine Ausgangskammer (11) aufweist, die mit der Eingangskammer (7) in Fluidverbindung steht und eingerichtet ist, den von dem granularen Material getrennten Fluidstrom abzuleiten;
- einer Dosiereinrichtung (16), die eingerichtet ist, das von dem Fluidstrom getrennte granulare Material zu empfangen und zu dosieren; und
- einer Ausbringleitung (18), die mit der Dosiereinrichtung (16) verbunden und eingerichtet ist, das dosierte granulare Material zu empfangen und über eine Ausgangsöffnung (19) auszubringen.

2. Anordnung nach Anspruch 1, **dadurch gekennzeichnet, dass** die Eingangskammer (7) eingerichtet ist, beim Strömen des Fluidstroms entlang des ersten und des zweiten Strömungsabschnitts (9a, 9b) die Verkleinerung der zweiten Strömungsgeschwindigkeit gegenüber der ersten Strömungsgeschwindigkeit passiv steuernd einzustellen.

3. Anordnung nach Anspruch 1 oder 2, **dadurch gekennzeichnet, dass** die Eingangskammer (7) im ersten Strömungsabschnitt (9a) einen ersten für den Fluidstrom wirksamen Strömungsquerschnitt und im zweiten Strömungsabschnitt (9b) einen zweiten für den Fluidstrom wirksamen Strömungsquerschnitt aufweist, welcher größer als der erste Strömungsquerschnitt ist.

4. Anordnung nach Anspruch 3, **dadurch gekennzeichnet, dass** die Vergrößerung des Strömungsquerschnitts mit einem sich kontinuierlichen vergrößernden Strömungsquerschnitt in der Eingangskammer (7) ausgebildet ist.

5. Anordnung nach mindestens einem der vorangehenden Ansprüche, **dadurch gekennzeichnet, dass** der erste Strömungsabschnitt (9a) an einen Kammereingang (6) der Eingangskammer (7) direkt anschließt.

6. Anordnung nach mindestens einem der vorangehenden Ansprüche, **dadurch gekennzeichnet, dass** der zweite Strömungsabschnitt (9b) an den ersten Strömungsabschnitt (9a) direkt anschließt.

7. Anordnung nach mindestens einem der vorangehenden Ansprüche, **dadurch gekennzeichnet, dass** das granulare Material in dem zweiten Strömungsabschnitt (9b) passiv gesteuert aus dem Fluidstrom trennbar ist, derart, dass das granulare Material aus dem Fluidstrom zur Dosiereinrichtung (16) hin ausfällt.

8. Anordnung nach mindestens einem der Ansprüche, **dadurch gekennzeichnet, dass** der Fluidstrom mit dem granularen Material in der Eingangskammer (7) entlang einer ersten Strömungsrichtung strömt und der von dem granularen Material getrennte Fluidstrom in der Ausgangskammer (11) entlang einer zweiten Strömungsrichtung strömt, die von der ersten Strömungsrichtung verschieden ist.

9. Anordnung nach Anspruch 8, **dadurch gekennzeichnet, dass** eine Kammerdurchgang zwischen der Eingangskammer (7) und der Ausgangskammer (11) derart eingerichtet ist, dass der von dem granularen Material getrennte Fluidstrom über den Kammerdurchgang (10) zur Ausgangskammer (11) hin entlang einer Strömungsrichtung strömen kann, die zur ersten und / oder zweiten Strömungsrichtung quer verläuft.

10. Anordnung nach mindestens einem der vorangehenden Ansprüche, **dadurch gekennzeichnet, dass** die Eingangskammer (7) und die Ausgangskammer (11) im Gehäuse (8) der Trenneinrichtung (5) benachbart zueinander angeordnet sind.

11. Anordnung nach mindestens einem der vorangehenden Ansprüche, **dadurch gekennzeichnet, dass** der Vorratsbehälter (1) eingerichtet ist, ein granulares Düngermaterial aufzunehmen, welches mit dem Fluidstrom über die Förderleitung zur Trenneinrichtung (5) transportierbar und mittels der Dosiereinrichtung (16) dosierbar ist.

12. Anordnung nach mindestens einem der vorangehenden Ansprüche, **dadurch gekennzeichnet, dass** ein Durchgang (14, 15) zwischen der Eingangskammer (7) der Trenneinrichtung (5) und der Dosiereinrichtung (16) eingerichtet ist, das Zuführen des granularen Materials mittels des Fluidstroms in die Eingangskammer (7) in Abhängigkeit eines Füllstands des granularen Materials im Bereich des Durchgangs passiv zu steuern.

13. Anordnung nach mindestens einem der vorangehenden Ansprüche, **dadurch gekennzeichnet, dass** ein Kammerausgang (12) der Ausgangskammer (11) eingerichtet ist, den Fluidstrom nach außen in eine Umgebung der Trenneinrichtung (5) abzugeben.

14. Landwirtschaftliche Sämaschine, mit einer Anordnung nach mindestens einem der vorangehenden Ansprüche.

15. Verfahren zum dosierten Ausbringen eines granularen Materials mittels einer Anordnung einer landwirtschaftlichen Maschine, mit:
- Bereitstellen eines granularen Materials wie Saatgut, Dünger oder dergleichen in einem Vorratsbehälter (1);
- Fördern des granularen Materials aus dem Vorratsbehälter (1) über eine Förderleitung (4) mittels einer Fördereinrichtung (2), die einen Fluidstrom zum Transportieren des granularen Materials erzeugt;
- Empfangen des Fluidstroms mit dem granularen Material in einer Trenneinrichtung (5) und Trennen des granularen Materials von dem Fluidstrom, wobei hierbei Folgendes vorgesehen ist:
- Empfangen des Fluidstroms mit dem granularen Material in einer Eingangskammer (7) in einem Gehäuse (8) der Trenneinrichtung (5),
- Strömen des Fluidstroms mit dem granularen Material entlang eines ersten Strömungsabschnitt (9a) der Eingangskammer (7) mit einer ersten Strömungsgeschwindigkeit,
- Strömen des Fluidstroms mit dem granularen Material entlang eines zweiten Strömungsabschnitt (9b) der Eingangskammer (7), welcher in Bezug auf den ersten Strömungsabschnitt (9a) stromabwärts ausgebildet ist und in welchem der Fluidstrom mit dem granularen Material mit einer gegenüber der ersten kleineren zweiten Strömungsgeschwindigkeit strömt,
- Trennen des granularen Materials aus dem Fluidstrom im zweiten Strömungsabschnitt (9b) und
- Ableiten des von dem granularen Material getrennten Fluidstrom über eine Ausgangskammer (11) im Gehäuse der Trenneinrichtung (5);
- Empfangen des vom Fluidstrom getrennten granularen Materials in einer Dosiereinrichtung (16);
- Dosieren des granularen Materials mittels der Dosiereinrichtung (16) und
- Ausbringen des dosierten granularen Materials über eine Ausgangsöffnung (19) einer Ausbringleitung (18).
